# EUROPÄISCHE PATENTANMELDUNG

(11) **EP 2 919 019 A1**
(43) Veröffentlichungstag der Anmeldung: **16.09.2015**
(21) Anmeldenummer: 15155693.3
(22) Anmeldetag: 19.02.2015
(51) Int. Cl.: G01P 15/08, G01C 19/5733, G01P 15/125

(54) **INERTIALSENSOR UND HERSTELLUNGSVERFAHREN ZUM HERSTELLEN EINES INERTIALSENSORS**

(30) Priorität: 14.03.2014 DE 102014204727
(71) Anmelder: ROBERT BOSCH GMBH, 70442 Stuttgart (DE)
(72) Erfinder: Rohlfing, Franziska, 71229 Leonberg (DE); Hoeppner, Christian, 70197 Stuttgart (DE); Schmidt, Benjamin, 70499 Stuttgart (DE); Heuck, Friedjof, 70197 Stuttgart (DE); Schelling, Christoph, 70597 Stuttgart (DE)

(57) **Zusammenfassung**

Die Erfindung betrifft einen Inertialsensor (100) mit einer eine Elektrode (108) aufweisenden Elektrodenschicht (102), einer eine erste Gegenelektrode (110) und eine zweite Gegenelektrode (112) aufweisenden Gegenelektrodenschicht (106) und einer einen ersten beweglich gelagerten Sensorkern (114) und einen zweiten beweglich gelagerten Sensorkern (116) aufweisenden Sensorkernschicht (104) aus einem monokristallinen Material, wobei die Sensorkernschicht (104) zwischen der Elektrodenschicht (102) und der Gegenelektrodenschicht (106) angeordnet ist.

## Beschreibung

### Stand der Technik

Die vorliegende Erfindung bezieht sich auf einen Inertialsensor und ein Herstellungsverfahren zum Herstellen eines Inertialsensors.

Der Markt für Inertialsensoren wurde in den letzten zwei Jahrzehnten durch die Einführung von mikrosystemtechnisch gefertigten Sensoren stark verändert. Dadurch konnten Inertialsensoren in einer großen Anzahl kostengünstig angeboten werden. Die Weiterentwicklung verlangt heutzutage, dass diese MEMS-Sensoren noch günstiger und in der Performance besser werden. Dieser Druck führt zu immer kleineren Sensoren, um Wafer-Fläche, gleich Kosten, zu sparen. Um immer leistungsfähigere Sensoren zu erhalten, müssen kontinuierlich das Design, der Prozess und der Aufbau der Sensoren verbessert werden. Eine weitere Möglichkeit, die Kosten zu senken, besteht darin, beide Inertialsensoren, Drehrate und Beschleunigung in einem einzelnen monolithischen Ansatz, im sogenannten 6DoF, zu fertigen.

Zurzeit werden die Sensoren auf einem Siliziumsubstrat aufgebaut. Dabei werden die notwendigen Schichten für vertikale Elektroden und Zuleitungen, elektrische Isolation, mechanische Entkopplung und der Sensorkern nacheinander abgeschieden.

### Offenbarung der Erfindung

Vor diesem Hintergrund werden mit dem hier vorgestellten Ansatz ein Inertialsensor sowie ein Herstellungsverfahren zum Herstellen eines Inertialsensors gemäß den Hauptansprüchen vorgestellt. Vorteilhafte Ausgestaltungen ergeben sich aus den jeweiligen Unteransprüchen und der nachfolgenden Beschreibung.

Ein Inertialsensor, bei dem insbesondere zwischen einer Elektrode und einer Gegenelektrode beweglich angeordnete Sensorkerne aus einem monokristallinen Material gebildet sind, kann besonders exakt strukturiert, ausgelegt, und kleinbauend hergestellt werden.

Durch die Verwendung des monokristallinen Materials können Schichtdickentoleranzen für die Sensorfunktionsschicht geringer gehalten werden als die einer aufgewachsenen polykristallinen Bauelementeschicht eines Inertialsensors. Neben der Möglichkeit, kostengünstig dickere Sensorkerne einzusetzen - die maximal fertigbare Schichtdicke des monokristallinen Materials ist nicht begrenzt - erlaubt die Verwendung des monokristallinen Materials zudem den Einsatz verbesserter Strukturierungsverfahren, die sich an der Kristallorientierung des Materials, z. B. monokristallinen Siliziums, orientieren.

Die Integration der Gegenelektrode über eine Kappenschicht des Inertialsensors kann dazu beitragen, die Sensitivität des Sensors für out-of-plane-Bewegungen, also Bewegung aus der Ebene heraus, zu erhöhen. Auch weitere Konzepte zur Quadraturkompensation sind realisierbar. Generell ermöglicht auch dieser Aspekt des hier vorgeschlagenen Konzepts für einen Inertialsensor eine weitere Bauraumverkleinerung des Sensors.

Mit dem hier vorgestellten Herstellungsverfahren kann ein kleinbauender, mechanisch stabiler und hochtemperaturstabiler Inertialsensor hergestellt werden, in dem sich unterschiedliche Drücke, die beispielsweise für Drehratensensoren und Beschleunigungssensoren geeignet sind, einschließen lassen.

Es wird ein Inertialsensor mit folgenden Merkmalen vorgestellt:
einer eine Elektrode aufweisenden Elektrodenschicht;
einer eine erste Gegenelektrode und eine zweite Gegenelektrode aufweisenden Gegenelektrodenschicht; und
einer einen ersten beweglich gelagerten Sensorkern und einen zweiten beweglich gelagerten Sensorkern aufweisenden Sensorkernschicht aus einem monokristallinen Material, wobei die Sensorkernschicht zwischen der Elektrodenschicht und der Gegenelektrodenschicht angeordnet ist.

Der Inertialsensor kann für die Messung von Beschleunigungen und/oder Drehraten beispielsweise in einem Fahrzeug eingesetzt werden. Die Gegenelektroden können ausgebildet sein, um im Zusammenspiel mit der Elektrode mit den zwischen der Elektrode und den Gegenelektroden befindlichen Sensorkernen in Wechselwirkung zu stehen. Bei dem monokristallinen Material kann es sich um monokristallines Silizium handeln.

Gemäß einer Ausführungsform des hierin vorgestellten Inertialsensors können ein erster Abschnitt der Elektrode, der erste Sensorkern und die erste Gegenelektrode ein Drehratensensorelement des Inertialsensors bilden und ein zweiter Abschnitt der Elektrode, der zweite Sensorkern und die zweite Gegenelektrode ein Beschleunigungssensorelement des Inertialsensors bilden. So können ein Drehratensensor und ein Beschleunigungssensor vorteilhaft monolithisch und damit Bauraum und Kosten sparend in einem gemeinsamen Sensorgehäuse zusammengefasst werden.

Gemäß einer weiteren Ausführungsform kann der Inertialsensor einen Kontaktierungsgraben zum elektrischen Kontaktieren der Elektrode aufweisen. Der Kontaktierungsgraben kann sich von einer von der Sensorkernschicht abgewandten Hauptseite der Gegenelektrodenschicht durch die Gegenelektrodenschicht und die Sensorkernschicht zu der Elektrode erstrecken. Eine Innenwand des Kontaktierungsgrabens kann eine leitfähige Beschichtung aufweisen. Mit dieser Ausführungsform kann die Elektrode ohne ein Vorhandensein von Durchkontakten einfach und sicher elektrisch kontaktiert werden. Dies ist insbesondere auch bei einem beispielhaften Sensoraufbau möglich, bei dem die Elektrode als in ein Substrat vergrabene Elektrode vorliegt. In weiteren Ausführungsformen kann der Inertialsensor einen zweiten Kontaktierungsgraben zum elektrischen Kontaktieren der Gegenelektrode und/oder einen dritten Kontaktierungsgraben zum elektrischen Kontaktieren der Sensorkernschicht aufweisen.

Der Inertialsensor kann ein Substrat aufweisen, das benachbart zu einer von der Sensorkernschicht abgewandten Hauptseite der Elektrodenschicht angeordnet sein kann. Das Substrat kann ausgebildet sein, um den Schichtstapel aus Elektrodenschicht, Sensorkernschicht und Gegenelektrodenschicht zu tragen und gleichzeitig Kontakte zur elektrischen Anbindung einzelner oder aller Schichten bereitzustellen. Der Kontaktierungsgraben kann sich bis zu einer von der Sensorkernschicht abgewandten Hauptseite des Substrats erstrecken. Damit können die Elektrodenschicht und/oder die Sensorkernschicht und/oder die Gegenelektrodenschicht vorteilhafterweise von zwei Außenseiten des Inertialsensors elektrisch kontaktiert werden.

Gemäß einer weiteren Ausführungsform kann der Inertialsensor einen Abschirmungsgraben zum elektrischen Abschirmen des Kontaktierungsgrabens aufweisen. Der Abschirmungsgraben kann so angeordnet sein, dass er den Kontaktierungsgraben mantelförmig umgibt. So können auf einfache Weise und ohne zusätzliche Elemente kapazitive Verluste des Inertialsensors vermieden werden.

Ferner kann der Inertialsensor einen Isolationsgraben zum elektrischen Isolieren der ersten Gegenelektrode von der zweiten Gegenelektrode aufweisen. Der Isolationsgraben kann sich von der von der Sensorkernschicht abgewandten Hauptseite der Gegenelektrodenschicht durch die Gegenelektrodenschicht zu der Sensorkernschicht erstrecken und zumindest teilweise mit einem Isolationsmaterial verfüllt sein. Der Isolationsgraben kann mit derselben Methode wie der oben beschriebene Kontaktierungsgraben angelegt werden. So kann mit wenig auf Aufwand und unter Verwendung bereits vorhandener Werkzeuge die elektrische Trennung der beiden Gegenelektroden hergestellt werden. Mit der in einem folgenden Arbeitsschritt durchgeführten zumindest teilweisen Verfüllung des Isolationsgrabens mit dem Isolationsmaterial kann der Isolationsgraben auf einfache Weise verschlossen werden und damit ein unerwünschter Kurzschluss mit an einer Außenseite des Inertialsensors verlaufenden elektrischen Leitungen vorteilhaft verhindert werden.

Der Inertialsensor kann mindestens einen weiteren Isolationsgraben aufweisen, der sich zum Unterteilen der ersten Gegenelektrode in einen ersten Gegenelektrodenabschnitt und einen zweiten Gegenelektrodenabschnitt von der von der Sensorkernschicht abgewandten Hauptseite der Gegenelektrodenschicht durch die Gegenelektrodenschicht zu der Sensorkernschicht erstrecken kann. Auch der weitere Isolationsgraben kann zumindest teilweise mit dem Isolationsmaterial verfüllt sein. Auch der weitere Isolationsgraben kann ohne Weiteres angelegt werden und sich als vorteilhaft für eine schnelle und gleichmäßige Einführung z. B. eines Ätzmittels in den Schichtaufbau zum Strukturieren eines Inneren des Inertialsensors erweisen.

Gemäß einer weiteren Ausführungsform kann der Inertialsensor eine erste Sensorkaverne, in der ein erster Druck herrscht, und eine zweite Sensorkaverne, in der ein sich von dem ersten Druck unterscheidender zweiter Druck herrscht, aufweisen. Dabei können der erste Sensorkern in der ersten Sensorkaverne und der zweite Sensorkern in der zweiten Sensorkaverne beweglich gelagert angeordnet sein. Beispielsweise kann es sich bei dem ersten Druck um einen niedrigen Druck und bei dem zweiten Druck um einen hohen Druck handeln. So kann die Funktionalität des Drehratensensorelements, das den niedrigen Druck benötigt, und die Funktionalität des Beschleunigungssensorelements, das den hohen Druck benötigt, innerhalb desselben Sensorgehäuses optimal unterstützt werden.

Die erste Sensorkaverne und/oder die zweite Sensorkaverne können durch die leitfähige Beschichtung, auch als Metallisierungsbeschichtung bezeichnet, des Kontaktierungsgrabens und/oder durch das Isolationsmaterial des Isolationsgrabens und/oder des weiteren Isolationsgrabens gegenüber einem Umfeld des Inertialsensors gasdicht abgeschlossen sein. Mit dieser Ausführungsform können die jeweils benötigten Drücke vorteilhafterweise mit bereits im Inertialsensor vorhandenen Elementen in den Sensorkavernen eingeschlossen werden.

Gemäß einer weiteren Ausführungsform kann der Inertialsensor zumindest ein Schaltungselement aufweisen. Das Schaltungselement kann an der von der Sensorkernschicht abgewandten Hauptseite der Gegenelektrodenschicht angeordnet sein. So können ohne Weiteres weitere Funktionalitäten, beispielsweise eine zusätzliche Druckmessung, in den Inertialsensor eingebracht werden.

Insbesondere können die erste Gegenelektrode und/oder die zweite Gegenelektrode aus einem monokristallinen Material gebildet sein. Mit dieser Ausführungsform kann eine Schichtdicke und/oder eine Strukturierung der Gegenelektrodenschicht exakt bestimmt und ausgeführt werden. Es können damit Herstellungskosten und Bauraum gespart werden.

Ferner kann die Sensorkernschicht oder/und die Gegenelektrodenschicht zumindest ein Funktionselement eines Drucksensors und/oder eines Hall-Sensors aufweisen. Mit dieser Ausführungsform kann der Inertialsensor vorteilhaft um weitere Funktionalitäten erweitert werden.

Gemäß einer weiteren Ausführungsform können der erste Sensorkern und/oder der zweite Sensorkern zum beweglichen Lagern Federelemente aufweisen. So können die Sensorkerne am Gehäuse des Inertialsensors befestigt werden, ohne ihre Beweglichkeit einzuschränken. Eine Erstreckungsrichtung der Federelemente kann dabei einer Kristallorientierung des monokristallinen Materials des ersten Sensorkerns und zweiten Sensorkerns entsprechen. So kann vorteilhafterweise ohne Weiteres eine Steifigkeit der Federelemente eingestellt werden.

Es wird ferner ein Herstellungsverfahren zum Herstellen eines Inertialsensors vorgestellt, wobei das Herstellungsverfahren die folgenden Schritte aufweist:
Bereitstellen eines Schichtaufbaus aus einer eine Elektrode aufweisenden Elektrodenschicht, einer einen ersten beweglich gelagerten Sensorkern und einen zweiten beweglich gelagerten Sensorkern aufweisenden Sensorkernschicht aus einem monokristallinen Material und einer eine erste Gegenelektrode und eine zweite Gegenelektrode aufweisenden Gegenelektrodenschicht;

Ätzen eines Schachts von der von der Sensorkernschicht abgewandten Hauptseite der Gegenelektrodenschicht durch die Gegenelektrodenschicht zu der Sensorkernschicht, um einen Isolationsgraben zwischen der ersten Gegenelektrode und der zweiten Gegenelektrode anzulegen;
zumindest teilweises Einbringen eines Isolationsmaterials in den Isolationsgraben, um die erste Gegenelektrode von der zweiten Gegenelektrode elektrisch zu isolieren;
Ätzen eines Schachts von einer von der Sensorkernschicht abgewandten Hauptseite der Gegenelektrodenschicht durch die Gegenelektrodenschicht und die Sensorkernschicht zu der Elektrode, um einen Kontaktierungsgraben für die Elektrode anzulegen; und
Aufbringen einer elektrisch leitfähigen Beschichtung auf eine Innenwand des Kontaktierungsgrabens, um die Elektrode elektrisch zu kontaktieren.

Das Herstellungsverfahren kann im Rahmen einer automatisierten Fertigungsstraße zur effizienten Produktion einer Vielzahl der oben beschriebenen Inertialsensoren zum Einsatz kommen. Auch durch diese Ausführungsvariante der Erfindung in Form eines Herstellungsverfahrens kann die der Erfindung zugrunde liegende Aufgabe schnell und effizient gelöst werden.

Gemäß einer Ausführungsform kann das Herstellungsverfahren einen Schritt des Sputterns einer Abschlussmetallisierung auf die von der Sensorkernschicht abgewandte Hauptseite der Gegenelektrodenschicht aufweisen. So kann der Inertialsensor nach seiner Fertigstellung ohne Weiteres an eine externe Stromquelle angeschlossen oder um zusätzliche elektronische Bauelemente erweitert werden.

Der hier vorgestellte Ansatz schafft ferner eine Vorrichtung, die ausgebildet ist, um die Schritte einer Variante des hier vorgestellten Herstellungsverfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine Prinzipdarstellung eines Inertialsensors gemäß einem Ausführungsbeispiel der vorliegenden Erfindung;
Fig. 2 eine Schnittdarstellung eines Inertialsensors gemäß einem weiteren Ausführungsbeispiel der vorliegenden Erfindung;
Fig. 3 eine Schnittdarstellung eines Inertialsensors mit an der Gegenelektrode angeordneten Schaltungselementen, gemäß einem Ausführungsbeispiel der vorliegenden Erfindung;
Fig. 4 eine Schnittdarstellung eines Inertialsensors mit gebondetem ASIC, gemäß einem Ausführungsbeispiel der vorliegenden Erfindung;
Fig. 5 eine Schnittdarstellung eines Inertialsensors mit unperforierter Gegenelektrode, gemäß einem Ausführungsbeispiel der vorliegenden Erfindung;
Fig. 6 eine Schnittdarstellung eines beispielhaften Schichtaufbaus für die Herstellung eines Inertialsensors gemäß einem Ausführungsbeispiel der vorliegenden Erfindung;
Fig. 7 eine Schnittdarstellung eines Inertialsensors mit angelegten Isolationsgräben, gemäß einem Ausführungsbeispiel der vorliegenden Erfindung;
Fig. 8 eine Schnittdarstellung eines Inertialsensors mit isolierten Isolationsgräben, gemäß einem Ausführungsbeispiel der vorliegenden Erfindung;
Fig. 9 eine Schnittdarstellung eines Details eines Inertialsensors mit auf dem Isolationsmaterial abgeschiedenem Silizium, gemäß einem Ausführungsbeispiel der vorliegenden Erfindung;
Fig. 10 eine Schnittdarstellung eines Inertialsensors mit angelegten Kontaktierungsgräben, gemäß einem Ausführungsbeispiel der vorliegenden Erfindung;
Fig. 11 eine Schnittdarstellung eines Details eines Inertialsensors mit in den Kontaktierungsgräben abgeschiedenem Silizium, gemäß einem Ausführungsbeispiel der vorliegenden Erfindung;
Fig. 12 eine Schnittdarstellung eines Details eines Inertialsensors mit auf der Oberseite aufgebrachter Metallisierung, gemäß einem Ausführungsbeispiel der vorliegenden Erfindung;
Fig. 13 bis 15 Elektronenmikroskopaufnahmen zur Veranschaulichung eines Ätzverfahrens zum Anlegen von Gräben und anschließender Abscheidung einer elektrisch leitfähigen polykristallinen Siliziumschicht zur elektrischen Kontaktierung;
Fig. 16 eine Schnittdarstellung eines Koaxialaufbaus eines Inertialsensors, gemäß einem Ausführungsbeispiel der vorliegenden Erfindung;
Fig. 17 eine Aufsicht auf den Koaxialaufbau eines Inertialsensors aus Fig. 16, gemäß einem Ausführungsbeispiel der vorliegenden Erfindung;
Fig. 18 eine Schnittdarstellung eines Koaxialaufbaus eines Inertialsensors mit Durchkontaktierung, gemäß einem Ausführungsbeispiel der vorliegenden Erfindung;
Fig. 19 eine Schnittdarstellung eines Inertialsensors mit eingeschlossenem Sputterdruck, gemäß einem Ausführungsbeispiel der vorliegenden Erfindung; und
Fig. 20 ein Ablaufdiagramm eines Herstellungsverfahrens zum Herstellen eines Inertialsensors, gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

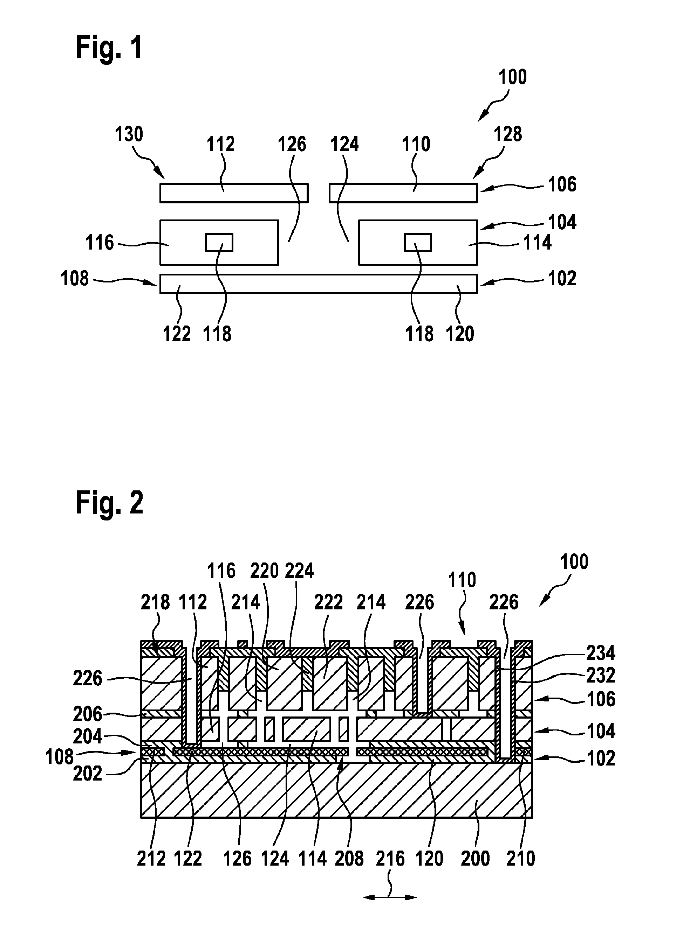

Fig. 1 zeigt eine Prinzipdarstellung eines Inertialsensors 100 gemäß einem Ausführungsbeispiel der vorliegenden Erfindung. Der Inertialsensor 100 ist im Schichtaufbau gestaltet und umfasst eine Elektrodenschicht 102, eine parallel zu der Elektrodenschicht 102 angeordnete Sensorkernschicht 104 und eine parallel zu der Sensorkernschicht 104 angeordnete Gegenelektrodenschicht 106, wobei die Sensorkernschicht 104 zwischen der Elektrodenschicht 102 und der Gegenelektrodenschicht 106 angeordnet ist.

Bei dem in Fig. 1 gezeigten Ausführungsbeispiel bildet die Elektrodenschicht 102 eine Basis und die Gegenelektrodenschicht 106 einen Deckel bzw. eine Kappe des Sensorschichtaufbaus 100. Ferner weist die Elektrodenschicht 102 eine Elektrode 108 auf. Die Gegenelektrodenschicht 106 weist eine erste Gegenelektrode 110 und eine zweite Gegenelektrode 112 auf, die sich nicht berührend in einer Ebene nebeneinander angeordnet sind. Bei der Sensorkernschicht 104 handelt es sich um eine mechanisch funktionale Schicht aus einem monokristallinen Material, z. B. Silizium. Wie die Darstellung in Fig. 1 zeigt, setzt sich die Sensorkernschicht 104 aus einem ersten Sensorkern 114 und einem zweiten Sensorkern 116 zusammen. Der erste Sensorkern 114 und der zweite Sensorkern 116 sind und ebenfalls sich nicht berührend in einer Ebene nebeneinander angeordnet. Bei dem in Fig. 1 gezeigten Ausführungsbeispiel bilden der erste Sensorkern 114 und der zweite Sensorkern 116 je einen Einkristall.

Über Federelemente 118 ist der erste Sensorkern 114 in einer von einem ersten Abschnitt 120 der Elektrode 108 und der ersten Gegenelektrode 110 gebildeten ersten Sensorkaverne 124 beweglich gelagert angeordnet und der zweite Sensorkern 116 in einer von einem zweiten Abschnitt 122 der Elektrode 108 und der zweiten Gegenelektrode 112 gebildeten zweiten Sensorkaverne 126 beweglich gelagert angeordnet. Eine Erstreckungsrichtung der Federelemente 118 entspricht dabei einer Kristallorientierung des monokristallinen Materials des ersten Sensorkerns 114 und zweiten Sensorkerns 116. Bei dem in Fig. 1 gezeigten Ausführungsbeispiel des Inertialsensors 100 sind auch die erste Gegenelektrode 110 und die zweite Gegenelektrode 112 aus einem monokristallinen Material gebildet. Die erste Gegenelektrode 110 ist ausgebildet, um gegenüber dem ersten Sensorkern 114 ein erstes elektrisches Potenzial bereitzustellen, und die zweite Gegenelektrode 112 ist ausgebildet, um gegenüber dem zweiten Sensorkern 116 ein sich von dem ersten elektrischen Potenzial unterscheidendes zweites elektrisches Potenzial bereitzustellen.

Bei dem in Fig. 1 gezeigten Ausführungsbeispiel bilden der erste Abschnitt 120 der Elektrode 108, der erste Sensorkern 114 und die erste Gegenelektrode 110 ein Drehratensensorelement 128 des Inertialsensors 100 und der zweite Abschnitt 122 der Elektrode 108, der zweite Sensorkern 116 und die zweite Gegenelektrode 112 ein Beschleunigungssensorelement 130 des Inertialsensors 100.

Fig. 2 zeigt einen Querschnitt durch einen beispielhaften Aufbau des hierin vorgestellten Inertialsensors 100. Bei dem in Fig. 2 gezeigten Ausführungsbeispiel weist der Inertialsensor 100 ferner ein Substrat 200 sowie eine erste Isolationsschicht 202, eine zweite Isolationsschicht 204 und eine dritte Isolationsschicht 206 auf. Das Substrat 200 ist zu einer von der Sensorkernschicht 106 abgewandten Hauptseite 208 der Elektrodenschicht 102 gewandt angeordnet und ausgebildet, um den Schichtaufbau 102, 104, 106 zu tragen. Unter dem hierin verwendeten Begriff "Hauptseite" ist, wie die Darstellung zeigt, jeweils eine Seite eines Elements mit den gegenüber anderen Seiten desselben Elements größten Abmessungen zu verstehen.

Die erste Isolationsschicht 202 ist zwischen dem Substrat 200 und der eine erste Funktionsschicht bildenden Elektrodenschicht 102 angeordnet, die zweite Isolationsschicht 204 ist zwischen der die erste Funktionsschicht bildenden Elektrodenschicht 102 und der eine zweite Funktionsschicht bildenden Sensorkernschicht 104 angeordnet, und die dritte Isolationsschicht 206 ist zwischen der die zweite Funktionsschicht bildenden Sensorkernschicht 104 und der eine dritte Funktionsschicht bildenden Gegenelektrodenschicht 106 angeordnet. Die Isolationsschichten 202, 204 und 206 gewährleisten eine zumindest teilweise elektrische Isolation zwischen dem Substrat 200 und der Elektrodenschicht 102 sowie zwischen der Elektrodenschicht 102 und der Sensorkernschicht 104 sowie zwischen der Sensorkernschicht 104 und der Gegenelektrodenschicht 106. Wie die Darstellung zeigt, weisen die Isolationsschichten 202, 204 und 206 gegenüber den übrigen Schichten des Sensorstapels 100 eine geringe Dicke auf. Die Gegenelektrodenschicht 106 ist durch eine wesentliche größere Dicke als die Elektrodenschicht 102 gekennzeichnet. Die die Elektrodenschicht 102 bildende Elektrode 108 ist im gezeigten Ausführungsbeispiel strukturiert ausgeführt. Sie weist eine materielle Trennung in den ersten Abschnitt 120 und zweiten Abschnitt 122 auf. Ferner weist die Elektrode 108 im gezeigten Ausführungsbeispiel einen dritten Abschnitt 210 und vierten Abschnitt 212 auf, die ebenfalls getrennt vorliegen.

Wie aus der Darstellung in Fig. 2 ersichtlich, sind die erste Sensorkaverne 124 und die zweite Sensorkaverne 126 durch ein Entfernen von Abschnitten der Isolationsschichten 202, 204 und 206 gebildet. In den Sensorkavernen 124, 126 sind jeweils der erste Sensorkern 114 und der zweite Sensorkern 116 mittels der hier nicht gezeigten Federelemente bewegbar angeordnet, sodass sie beispielsweise zur Messgrößenerfassung frei in den Kavernen 124, 126 schwingen können.

Das in Fig. 2 gezeigte Ausführungsbeispiel des Inertialsensors 100 weist ferner eine Mehrzahl von Isolationsgräben 214 auf, die sich quer zu einer mittels eines Doppelpfeils in der Darstellung gekennzeichneten Haupterstreckungsrichtung 216 des Sensorschichtstapels 100 von einer von der Sensorkernschicht 104 abgewandten Hauptseite 218 der Gegenelektrodenschicht 106 durch die Gegenelektrodenschicht 106 zu der Sensorkernschicht 104 erstrecken. Insbesondere schafft bei dem in Fig. 2 gezeigten beispielhaften Inertialsensor 100 einer der Isolationsgräben 214 eine elektrische Trennung der ersten Gegenelektrode 110 von der zweiten Gegenelektrode 112. Ein weiterer Isolationsgraben 214 stellt eine elektrische Trennung der ersten Gegenelektrode 110 in einen ersten Gegenelektrodenabschnitt 220 und einen zweiten Gegenelektrodenabschnitt 222 her. Wie die Darstellung in Fig. 2 zeigt, sind die Isolationsgräben 214 unterschiedlich weit voneinander beabstandet und jeweils beginnend an der Hauptseite 218 der Gegenelektrodenschicht 106 bis zu einer vordefinierten Tiefe mit einem Isolationsmaterial 224 verfüllt. Bei dem in Fig. 2 gezeigten Sensorkonzept schafft der die obere Gegenelektrode 110 perforierende weitere Isolationsgraben 214 einen Zugang für einen HF-Opferoxidätzprozess für die mechanische Freistellung des darunterliegenden Sensorkerns 114.

Der in Fig. 2 gezeigte beispielhafte Inertialsensor 100 weist ferner eine Mehrzahl von Kontaktierungsgräben 226 auf, die sich von der von der Sensorkernschicht 104 abgewandten Hauptseite 218 der Gegenelektrodenschicht 106 durch die Gegenelektrodenschicht 106 unterschiedlich tief ins Innere des Inertialsensors 100 erstrecken. Ein erster Kontaktierungsgraben 226 erstreckt sich von der von der Sensorkernschicht 104 abgewandten Hauptseite 218 der Gegenelektrodenschicht 106 durch die Gegenelektrodenschicht 106, die dritte Isolationsschicht 206, die Sensorkernschicht 104 und die zweite Isolationsschicht 204 zu der Elektrode 108, um eine elektrische Kontaktierungsmöglichkeit der Elektrode 108 bereitzustellen. Ein zweiter Kontaktierungsgraben 226 erstreckt sich von der von der Sensorkernschicht 104 abgewandten Hauptseite 218 der Gegenelektrodenschicht 106 durch die Gegenelektrodenschicht 106 und die dritte Isolationsschicht 206 zu der Sensorkernschicht 104, um eine elektrische Kontaktierungsmöglichkeit der Sensorkernschicht 104 bereitzustellen. Ein dritter Kontaktierungsgraben 226 erstreckt sich von der von der Sensorkernschicht 106 abgewandten Hauptseite 218 der Gegenelektrodenschicht 106 durch die Gegenelektrodenschicht 106, die dritte Isolationsschicht 206, die Sensorkernschicht 104, die zweite Isolationsschicht 204, die Elektrode 108 und die erste Isolationsschicht 202 zu dem Substrat 200, um eine elektrische Kontaktierungsmöglichkeit des Substrats 200 bereitzustellen. Jeder der Kontaktierungsgräben 226 des exemplarischen Inertialsensors 100 in Fig. 2 weist eine elektrisch leitfähige Beschichtung 232 zur Gewährleistung der elektrischen Leitfähigkeit der Kontaktierungsgräben 226 auf. Wie die Darstellung zeigt, ist die elektrisch leitfähige Beschichtung 232 vollständig auf Innenwände 234 der Kontaktierungsgräben 226 aufgebracht.

Die Darstellung in Fig. 2 zeigt ferner, dass die erste Sensorkaverne 124 durch das Isolationsmaterial 224 der sie umgebenden Isolationsgräben 214 und stehen gelassene Abschnitte der Isolationsschichten 202, 204, 206 gegenüber einem Umfeld des Inertialsensors 100 gasdicht abgeschlossen ist und die zweite Sensorkaverne 126 durch stehen gelassene Abschnitte der Isolationsschichten 204 und 206 sowie die elektrisch leitfähigen Beschichtung 232 des ersten Kontaktierungsgrabens 226 gegenüber dem Umfeld des Inertialsensors 100 gasdicht abgeschlossen ist. Über die "Wände" der Sensorkavernen 124, 126 können vordefinierte, gleiche oder unterschiedliche Drücke in den Sensorkavernen 124, 126 installiert werden. Entsprechend der Funktionalität des in der ersten Sensorkaverne 124 zur Drehratenerfassung eingesetzten ersten Sensorkerns 114 herrscht in der ersten Sensorkaverne 124 ein erster, niedriger Druck und in der zweiten Sensorkaverne 126 entsprechend der Funktionalität des in der zweiten Sensorkaverne 126 zur Beschleunigungserfassung eingesetzten zweiten Sensorkerns 116 ein zweiter, hoher Druck.

Der in Fig. 2 anhand des vereinfachten Querschnitts beispielhaft vorgeschlagene neuartige Inertialsensor 100 ist von unten nach oben beschrieben aus dem Substrat 200, der ersten Isolationsschicht 202, der ersten Funktionsschicht 102, der zweiten Isolationsschicht 204, dem monokristallinen Sensorkern 104, der dritten Isolationsschicht 206, der dritten Funktionsschicht 106 und der Isolations- bzw. Verschlussschicht aus dem Isolationsmaterial 224 aufgebaut.

Gemäß einer Ausführungsform ist das Substrat 200 aus Silizium gebildet. Die erste Isolationsschicht 202 trennt die erste Funktionsschicht 102 elektrisch vom Substrat 200. Die erste Isolationsschicht 202 kann, falls es vorteilhaft erscheint, strukturiert werden. Bei Bedarf kann die erste Isolationsschicht 202 aus mehreren isolierenden Materialien bestehen, wie z. B. SiO₂ und/oder SiN. Die erste Funktionsschicht 102 stellt die untere Elektrode 108 sowie Zuleitungen dar. Sie ist entweder fest über die erste Isolationsschicht 202 mit dem Substrat 200 verbunden oder frei stehend bzw. schwebend über dem Substrat 200 angeordnet. Gemäß einer Ausführungsform des Inertialsensors 100 dient die erste Funktionsschicht 102 als untere Verdrahtungsebene des Sensors 100. Je nach Anwendung des Inertialsensors 100 kann eine Schichtdicke der ersten Funktionsschicht 102 wenigen Mikrometern bis hin zu einigen 10 µm betragen. Die erste Funktionsschicht 102 kann aus polykristallinem Silizium bestehen oder, wenn es sich als günstiger erweist, direkt als SOI (Silicon On Insulator; Silizium auf einem Isolator) zusammen mit der unterliegenden ersten Isolationsschicht 202 und dem Substrat 200 eingesetzt werden. Jedoch ist die erste Funktionsschicht bzw. Elektrodenschicht 102 nicht auf die Verwendung von Silizium beschränkt, es können auch andere elektrisch leitfähige Materialien eingesetzt werden.

Die über der ersten Funktionsschicht 102 liegende zweite Isolationsschicht 204 ist bei dem in Fig. 2 gezeigten Ausführungsbeispiel des Inertialsensors 100 strukturiert ausgeführt und dient zum einen als elektrische Isolation und Abstandshalter zwischen der unteren Elektrode 108 und dem eigentlichen Inertialsensorkern 104. Die zweite Isolationsschicht 204 kann aus SiO₂ bestehen, welches vorteilhafterweise aus einer thermischen Oxidation von Silizium entsteht. Dadurch lassen sich sehr genaue Schichtdicken ohne große Varianzen herstellen. Im Bereich unter dem Sensorkern 104 ist die zweite Isolationsschicht 204 als Opferschicht zumindest teilweise entfernt.

Über der zweiten Isolationsschicht 204 liegt der Sensorkern bzw. die Sensorkernschicht 104, die vorteilhafterweise aus kristallinem Silizium besteht. Wie schon erwähnt, hat die Verwendung von kristallinem Silizium für die Sensorkerne 114, 116 bedeutende Vorteile. So weist die Sensorkernschicht 104 keine Körner und damit wohldefinierte mechanische Eigenschaften auf. Durch die Ausnutzung des anisotropen Youngs-Modulus von kristallinem Silizium können für die in Fig. 1 gezeigten Federn zum Lagern der Kerne 114, 116 über die Wahl der Orientierung zum Kristall bei gleichem Querschnitt unterschiedliche Steifigkeiten erreicht werden. Für die Herstellung der Sensorkerne 114, 116 können kristallorientierte Ätzverfahren mit besseren Fertigungstoleranzen eingesetzt werden. Auch besitzen einkristalline Silizium-Oberflächen eine bessere Oberflächenqualität als polykristalline Oberflächen. Dies spiegelt sich in einer verbesserten Fotolithografie und einer geringeren Rauigkeit der Sensorkernschicht 104 wider. Monokristalline Oberflächen neigen im Prozess eher zur Glättung als zur Aufrauung wie bei polykristallinem Silizium. Gemäß Ausführungsbeispielen des Inertialsensors 100 kann die zweite Funktionsschicht 104 im Verbund mit der dritten Funktionsschicht 106 als SOI eingesetzt werden. Dadurch kann die zweite Funktionsschicht 104 durch den Device Layer des SOI dargestellt werden. Die Dickenvarianz des Device Layers aus zweiter Funktionsschicht 104 und dritter Funktionsschicht 106 kann in heutigen SOI-Verfahren auf bis zu ± 0,25 µm relativ unabhängig von der Schichtdicke eingestellt werden. Diese Werte können nur schwer über polykristalline Schichten erreicht werden. Schließlich können, da SOI-Wafer durch Bonden und Rückschleifen des Device Layers hergestellt werden, kostengünstig dickere Schichten für die zweite Funktionsschicht bzw. Sensorkernschicht 104 verwendet werden.

Die Anforderungen an die über der zweiten Funktionsschicht 104 liegende dritte Isolationsschicht 206 sind die gleichen wie an die zweite Isolationsschicht 204. Wichtig ist hierbei, dass die dritte Isolationsschicht 206 möglichst exakt die gleiche Schichtdicke wie die zweite Isolationsschicht 204 aufweist, was sich sehr gut über thermische Oxidation realisieren lässt.

Die dritte Funktionsschicht 106 dient als Gegenelektrode oder obere Elektrode im Inertialsensor 100. Durch obere Elektrodenschicht 106 und untere Elektrodenschicht 102 lässt sich die Kapazität für die out-of-plane-Erfassung verdoppeln. Darüber hinaus können neue Konzepte für eine Quadraturkompensation umgesetzt werden, da die Sensorkerne 114, 116 zusätzlich von oben elektrostatisch angezogen werden können. Damit können die Sensorfläche 104 sowie die notwendigen Spannungen reduziert und ein Kostenvorteil im ASIC erreicht werden. Zuletzt können durch die aktive obere Elektrodenschicht 106 elektrische Streufelder definiert und ggf. kompensiert werden.

Die Gegenelektroden 110, 112 stellen bei dem hier vorgestellten Inertialsensor 100 eine Verkappung des Inertialsensors 100 dar und schließen damit hermetisch einen Unterdruck im Inneren des Sensors 100 ein. Äußere Einflüsse, wie u. a. Druckänderungen, mechanischer Stress, etc. werden über die Kappenschicht 106 abgeschirmt. Als Konsequenz ist diese Schicht 106 von einigen 10 µm bis zu einigen 100 µm ausreichend dick ausgeführt. Wie auch im Falle der zweiten Funktionsschicht 104 bietet es sich für die dritte Funktionsschicht 106 an, einen SOI-Wafer zu verwenden. Wobei in einem solchen Fall der Handlewafer zugleich die dritte Funktionsschicht 106 darstellt. Im Herstellungsverfahren des hier vorgeschlagenen Inertialsensors 100 kann die dritte Funktionsschicht 106 nach der Verbindung mit dem Substrat 200 auf die gewünschte Dicke zurückgeschliffen werden. Dies ist im Vergleich zu einem Abscheideprozess bei den notwendigen Schichtdicken eindeutig kostengünstiger.

Im Gegensatz zu lateralen Leiterbahnen, die in einem CMOS vorhanden sind, kann die monokristalline dicke dritte Funktionsschicht bzw. Gegenelektrodenschicht 106 auch für Stromflüsse in vertikaler Richtung verwendet werden. Dies ist eindeutig vorteilhaft beispielsweise für die Integration von horizontal messenden Magnetfeldsensoren basierend auf dem Hall-Effekt. Mit dem hier vorgestellten Konzept können horizontal messende Magnetfeldsensoren mit geringem Aufwand, geringen Kosten und kleiner elektrischer Leistung realisiert werden. Ferner erlaubt eine monokristalline Decksschicht 106 die Integration von Piezoresistoren, die noch zusätzlich u. a. Druck oder Verspannungen des Sensors 100 messen können, um damit unerwünschte externe Einflüsse zu kompensieren.

Die Isolations- bzw. Verschlussschicht 224 hat mehrere Funktionen. Zum einen trennt sie elektrisch die verschiedenen Bereiche der dritten Funktionsschicht 106, z .B. in die erste Gegenelektrode 110 und die zweite Gegenelektrode 112 sowie die zweite Gegenelektrode 112 in den ersten Abschnitt 220 und zweiten Abschnitt 222. Zum anderen stellt die Isolationsschicht 224 einen Verschluss dar, um einen Unterdruck, z. B. den ersten Druck in der ersten Sensorkaverne 124 für den freigestellten Sensorkern 114, einzuschließen. Der erste Druck wird bei der Herstellung des Inertialsensors 100 durch einen Abscheideprozess eingestellt, in dem der Verschluss geschlossen wird. Dies kann vorteilhafterweise in einem LPCVD-Prozess bzw. einer chemischen Gasphasenabscheidung bei Niederdruck bei hohen Temperaturen geschehen. Dadurch wird ein Druck im Mikrobarbereich eingeschlossen. Dieser niedrige Druck ist zur Erreichung einer hohen Schwingergüte geeignet und damit vorteilhaft für die Funktionalität des den ersten Abschnitt 120 der Elektrode 108, den ersten Sensorkern 114 und die erste Gegenelektrode 110 umfassenden Drehratensensorelements128 des Inertialsensors 100. Die Isolations- bzw. Verschlussschicht 224 kann u. a. aus SiO₂, SiN oder einer Kombination mehrerer u.a. ggf. elektrisch leitfähigen Schichten mit u. a. Polysilizium bestehen. Der erwünschte Druck in der Kaverne und damit der notwendige Prozess bestimmt die Wahl der Verschlussschicht.

Die abschließende Metallisierung 232 stellt eine weitere Verdrahtungsebene des Inertialsensors 100 dar, die im Gegensatz zu dotierten Polysilizium-Bahnen einen niedrigeren elektrischen Widerstand besitzt. Gemäß Ausführungsbeispielen kann die elektrisch leitfähige Beschichtung 232 durch das Isolationsmaterial 224 von der dritten Funktionsschicht 106 getrennt werden.

Gemäß Ausführungsbeispielen des hierin vorgestellten Inertialsensors 100 kann die Sensorkernschicht 104 und oder die Gegenelektrodenschicht 106 zumindest ein Funktionselement eines Drucksensors und/oder eines Hall-Sensors aufweisen.

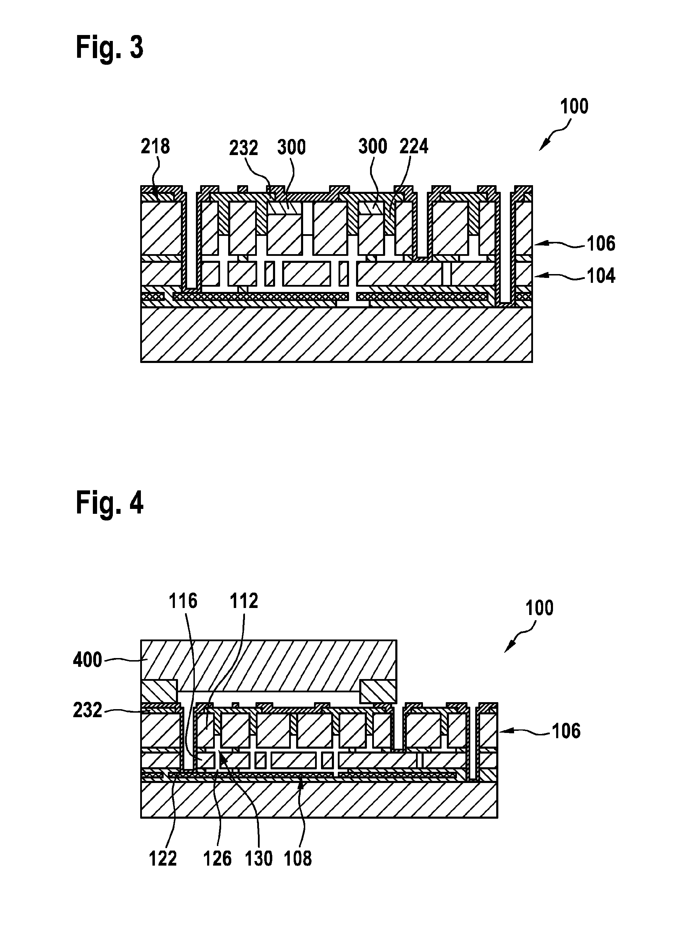

Fig. 3 zeigt wiederum anhand eines vereinfachten Querschnitts eine exemplarische Integration einfacher logischer Funktionen bzw. passiver elektrischer Bauelemente wie u.a, Kapazitäten in den beispielhaften Inertialsensor 100 aus Fig. 2. Wie die Darstellung zeigt, ist der Inertialsensor 100 um zwei Schaltungselemente 300 ergänzt. Die Schaltungselemente 300 sind an der von der Sensorkernschicht 104 abgewandten Hauptseite 218 der Gegenelektrodenschicht 106 unterhalb des Isolationsmaterials 224 bzw. der Metallisierung 232 angeordnet. Da bei dem in Fig. 3 gezeigten Ausführungsbeispiel des Inertialsensors 100 die die Deckschicht des Sensors 100 bildende Gegenelektrodenschicht 106 aus monokristallinem Silizium besteht, können ähnlich wie in einem CMOS-Prozess mittels der Schaltelemente 300 logische Funktionen in den Inertialsensor 100 integriert werden.

Fig. 4 zeigt in einer Schnittdarstellung eine Ergänzung des Inertialsensors 100 aus Fig. 2 um einen ASIC 400, gemäß einem Ausführungsbeispiel der vorliegenden Erfindung. Wie die Darstellung zeigt, bildet der ASIC 400 bei dem gezeigten Ausführungsbeispiel eine abschließende Kappe des Inertialsensors 100, die ausgebildet ist, um störende externe Einflüsse auf den Sensor 100 zu reduzieren. Der ASIC 400 wurde im Herstellungsverfahren des Sensors 100 auf die Gegenelektrodenschicht 106 gebondet. Bei dem hier vorgestellten Konzept eines Inertialsensors befindet sich die Metallisierung 232 an der höchsten Stelle des Sensoraufbaus 100 und erlaubt dadurch eine kostengünstige elektrische Verbindung des Sensors 100 zum ASIC 400 mittels einer Wende-Montage bzw. des so genannten "Flip-Chip-Bonding". Auf diese Weise können störende externe Einflüsse, wie z. B Druckschwankungen, auf den sensitiven MEMS-Teil des Inertialsensors 100 wirksam reduziert werden.

Darüber hinaus kann der Metallisierungsprozess auch dazu verwendet werden, den zweiten Druckbereich in der zweiten Sensorkaverne 126 einzustellen. Wird die Metallisierung 232 in einem Sputterprozess abgeschieden, so kann ein Druck im Millibarbereich in der zweiten Sensorkaverne 126 erreicht werden. Dieser gilt als vorteilhaft für eine Funktionalität des den zweiten Abschnitt 122 der Elektrode 108, den zweiten Sensorkern 116 und die zweite Gegenelektrode 112 umfassenden Beschleunigungssensorelements 130 des Inertialsensors 100. Auf diese Weise kann sowohl die Drehratenerfassung als auch die Beschleunigungserfassung kostengünstig in den Sensoraufbau 100 integriert werden. Als Material für die Metallisierung 232 kann u. a. Aluminium verwendet werden.

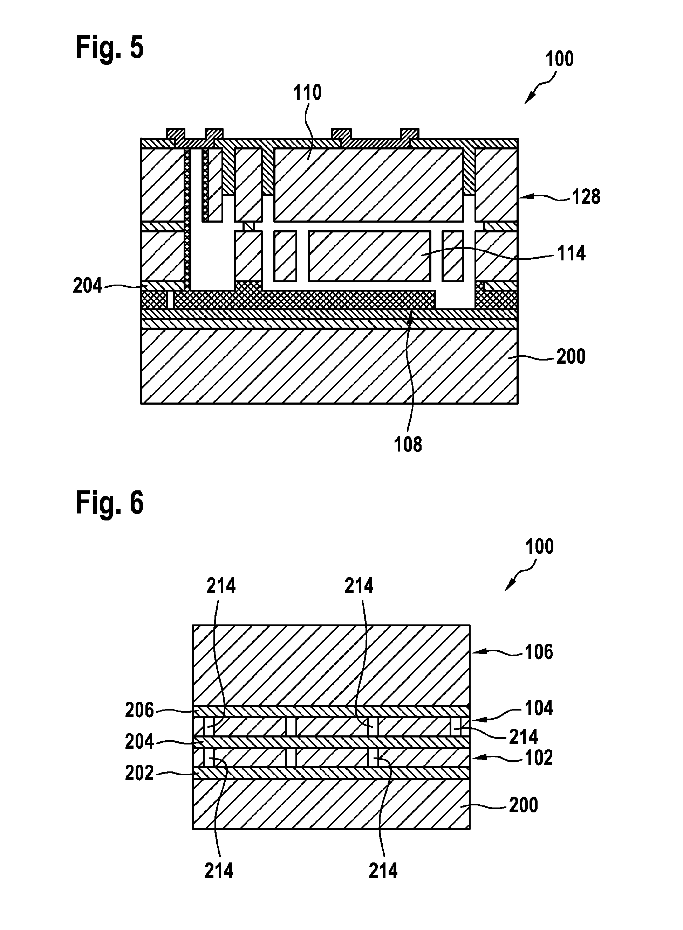

Fig. 5 zeigt anhand eines weiteren vereinfachten Querschnitts einen Ausschnitt aus einem weiteren Ausführungsbeispiel des hier vorgeschlagenen Inertialsensors 100. Der ausschnittsweise gezeigte Sensoraufbau 100 entspricht dem in Fig. 2 dargestellten, mit dem Unterschied, dass die erste Gegenelektrode 110 einstückig gebildet ist, also nicht mittels eines Isolationsgrabens in zwei Abschnitte unterteilt ist. Bei dem in Fig. 5 gezeigten Ausführungsbeispiel des Inertialsensors 100 mit nicht perforierter oberer Elektrode 110 geschieht das Entfernen der Opferoxidschicht bzw. zweiten Isolationsschicht 204 zwischen unterer Elektrode 108 und Sensorkern 114 vor der Verkappung des Sensors 100. Dann wird der vorher strukturierte Kappenwafer, der u. a. die obere Elektrode bzw. erste Gegenelektrode 110 darstellt, justiert auf den Kern 114 gebondet.

Mit der hierin vorgeschlagenen Einführung der oberen, über dem Sensorkern 114 liegenden, Flächenelektrode 110 können elektrostatische Kräfte für eine Mitkopplung bzw. elektrostatische Federerweichung, eine Quadraturkompensation sowie eine Rückregelung von Coriolisbewegungen (im Closed-Loop-Betrieb) für out-of-plane-Bewegungen des Drehratensensorelements 128 des Inertialsensors 100 nun in zwei Richtungen aufgebracht werden. Hierdurch wird der Sensorkern114 in beide Richtungen, nach unten in Richtung Substrat 200 und nach oben in Richtung der Kappe, vorausgelenkt, wodurch die Eigenschaften des Sensors100 positiv beeinflusst werden. Bei der Quadraturkompensation für out-of-plane-Moden können nichtlineare Kräfte, die signifikant zur Anregung von Störmoden bei höheren Frequenzen beitragen könnten bzw. die Vibrationsrobustheit des Drehratensensors 128 negativ beeinflussen könnten, ausgeschaltet werden.

Das u. a. in Fig. 5 umgesetzte hier vorgeschlagene Konzept hebt die Beschränkung der verfügbaren Sensorfläche des Inertialsensors 100 durch die Größe der Kapazitäten des Sensorkerns 114 gegenüber den Flächenelektroden 108, 110 für Bewegungsdetektion und Krafteinkopplung auf. Der Abstand zwischen Kern 114 und Kappe 110 unterliegt nicht länger großen Prozessschwankungen und ist im Allgemeinen nicht größer als ein Grundabstand zwischen Kern 114 und unterer Elektrode 108. Da bei dem hier vorgestellten Konzept auf Sealglass-Bonden und eutektische Bondverfahren zum Anbinden der Kappe 110 verzichtet werden kann, kann das elektrische Potenzial der Kappe 110 exakt definiert werden. Influenzladungen auf dem Sensorkern 114 können damit vermieden werden.

Der auf einer asymmetrischen Terminierung der elektrischen Streufelder oben und unten basierende sogenannte Effekt der Levitation in Kammantriebsstrukturen, mit denen der Drehratensensor 128 zu in-plane-Schwingungen angeregt wird, tritt hier nicht auf. Dies bedeutet, dass die Antriebsstruktur mit der Frequenz der in-plane Nutzbewegung auch zu out-of-plane-Schwingungen angeregt wird. Die Kapazitäten und elektrischen Felder zwischen Kern 114 und oberer Elektrode 110 sind symmetrisch zu den Kapazitäten und Feldern zwischen Kern 114 und unterer Elektrode 108. Eine Anregung von Störmoden, die sich negativ auf die Performance des Drehratensensorelements 128 auswirken können, kann so vorteilhaft vermieden werden. Auch durch parallele in-plane-Bewegungen einer perforierten Kernmasse in der Antriebsmode verursachte Modulationen in der Kapazität zwischen oberer Elektrode 110 und unterer Elektrode 108 können mit der Verwendung der Flächenelektrode 110 vermieden werden. Mit verstärktem Rauschen des Sensors 100 und einer Anregung von parasitären Moden muss nicht länger gerechnet werden.

Das in Fig. 5 gezeigte Konzept der unperforierten oberen Flächenelektrode 110 verbessert somit vielseitig die Performance insbesondere des Drehratensensorelements 128 des Inertialsensors 100. Außerdem erlaubt die Erfindung eine Flächenreduktion bestimmter Ausführungsbeispiele des Inertialsensors 100, da pro Sensorfläche doppelte Kapazitäten der Elektroden 108, 110 für Bewegungsdetektion und Krafteinkopplung für out-of-plane-Bewegungen verwirklicht werden können.

Zusätzlich kommt es aufgrund der fehlenden Perforation zu keiner/geringeren unerwünschten elektrischen Feldlinienverkrümmung zwischen dem beweglichen, bewegten Sensorkern 114 und der oberen unperforierten Flächenelektrode 110.

Gemäß den in den Figuren 1 bis 5 gezeigten Ausführungsbeispielen des Inertialsensors 100 wird ein Aufbau vorgeschlagen, der durch die vergrabene Kontaktebene 102 als Verdrahtung und untere Elektrode 108 gekennzeichnet ist und dessen durch die Gegenelektrodenschicht 106 repräsentierte funktionale Kappenschicht von einkristallinem Material gebildet wird. Die verschiedenen Potenziale in der Kappenschicht 106 sind durch die verfüllten Isolationsgräben 214 voneinander getrennt. Als Verfüllmaterial 224 wird z. B. siliziumreiches Nitrid verwendet. Die elektrisch leitfähige Beschichtung 232 auf der Höhe der Kappe 106 ermöglicht eine vereinfachte Verbindung ohne TSVs bzw. Durchkontakte zum ASIC 400, beispielsweise über Flip-Chip-Bonden. In dem einkristallinen Kappenmaterial 106 können Schaltungselemente 300 wie z. B. auch Piezowiderstände eingebracht werden. Insbesondere ist die Möglichkeit gegeben, beide Inertialsensoren, den Beschleunigungssensor 130 und den Drehratesensor 128, sowie weitere Sensoren wie Druck- und Hall-Sensoren in einem Prozess bzw. Sensor 100 monolithisch zu integrieren. Durch einen zweistufigen Verschluss der Gyro-Kaverne 124 mit einem Hochtemperatur-LPCVD-Prozess und der Beschleunigungssensorkaverne 126 mit einem Niedertemperatur-Sputtermetallisierungsprozess ist sowohl die Kompatibilität mit einer Antihaftbeschichtung als auch der Einschluss verschiedener Drücke in der Gyro-Kaverne 124 bzw. der Beschleunigungssensor-Kaverne 126 möglich.

Nachfolgend wird auf eine Herstellung des in den Figuren 1 bis 5 vorgestellten Inertialsensors 100 eingegangen.

Die elektrische Kontaktierung von Ebenen, die tief im Substrat liegen, oder auch die elektrische Kontaktierung durch einen Silizium-Wafer ist eine technologische Herausforderung. Im Stand der Technik geschieht eine elektrische Kontaktierung beispielsweise über die Rückseite zur aktiven Ebene unter Verwendung eines dicken Silizium-Stempels, der über ein Oxidgitter vom restlichen Substrat elektrisch getrennt ist. Die Herausforderung hierbei ist, ein mechanisch stabiles Oxidgitter herzustellen, das den relativ großen Stempel tragen kann. Hierzu wird beispielsweise eine konische Öffnung ins Substrat getrencht und anschließend eine elektrisch isolierende Schicht abgeschieden, die am Boden, im Graben, geöffnet wird, um einen elektrischen Kontakt zur vergrabenen Schicht zu ermöglichen. Anschließend wird eine Metallisierung über Sputtern abgeschieden, die den elektrischen Kontakt zwischen der Oberfläche und der vergrabenen Schicht herstellt. Herausfordernd ist es stets, die Kontaktierung so herzustellen, dass sie möglichst kleinbauend, elektrisch leitfähig und mit niedriger Kapazität zum Substrat ist. Generell liegt die Schwierigkeit darin, die Kontaktierung konform in einem Prozessfluss zu integrieren.

Fig. 6 zeigt anhand einer Schnittdarstellung einen beispielhaften Schichtaufbau für die Herstellung des hierin vorgeschlagenen Inertialsensors 100 gemäß einem Ausführungsbeispiel der vorliegenden Erfindung. Bereitgestellt wird der bereits aus den Figuren 2 bis 5 bekannte Funktionsschichtaufbau vor der elektrischen Kontaktierung zur Herstellung der Funktionalität des Inertialsensors 100. Der Schichtaufbau umfasst von unten nach oben betrachtet das Substrat 200, die erste Isolationsschicht 202, die die erste Funktionsschicht bildende Elektrodenschicht 102, die zweite Isolationsschicht 204, die die zweite Funktionsschicht bildende Sensorkernschicht 104, die dritte Isolationsschicht 206 und die die dritte Funktionsschicht bildende 106 des Inertialsensors 100.

Es sei darauf hingewiesen, dass sich diese Erfindung nicht ausschließlich auf den in Fig. 6 gezeigten Aufbau bezieht, sondern zur elektrischen Kontaktierung von Ebenen in verschiedenen Aufbauten genutzt werden kann. Dieser hier verwendete Aufbau besteht aus den drei funktionalen Schichten 102, 104, 106 und dem Substrat 200. Jede der funktionalen Schichten 102, 104, 106 ist durch eine der elektrisch isolierenden Schichten 202, 204, 206 voneinander getrennt. In der zweiten Funktionsschicht 104 kann z. B. die bewegliche Masse ausgebildet werden. Die erste Funktionsschicht 102 kann z. B. als untere Elektrode dienen und die dritte Funktionsschicht 106 die Gegenelektrode sowie einen Verschluss bzw. eine Verkappung des Sensors 100 bilden. Die Schichtdicken liegen im Bereich zwischen 150 µm und 200 µm für das Substrat 200 und die dritte Funktionsschicht 106. Die Schichtdicken der Funktionsschichten 102 und 104 liegen im Bereich von 1 µm bis 50 µm, und die isolierenden Schichten 202, 204, 206 haben eine Dicke von 0,1 µm bis 3 µm. Im Prozess werden die funktionalen Schichten 104 und 106 strukturiert, und es können dabei Hohlräume erzeugt werden. Wie die Darstellung in Fig. 6 zeigt, sind die Isolationsgräben 214 für eine elektrische Trennung der Funktionsschichten 102 und 104 in verschiedene Abschnitte in dem bereitgestellten Schichtstapel bereits teilweise angelegt.

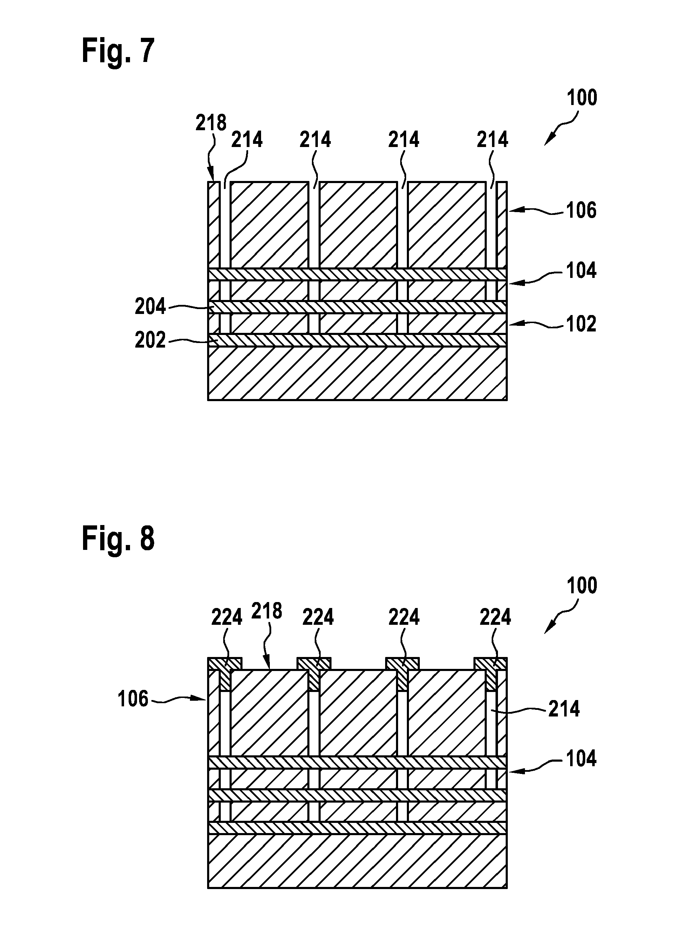

Fig. 7 zeigt in einer weiteren Schnittdarstellung den Schichtstapel aus Fig. 6 nach einem weiteren Prozessschritt zum Herstellen des Inertialsensors 100. Hier sind nach der Strukturierung der dritten Funktionsschicht 106 die Isolationstrenche bzw. Isolationsgräben 214 vollständig angelegt, d. h., sie erstrecken sich von der von der Sensorkernschicht 104 abgewandten Hauptseite 218 der Gegenelektrodenschicht 106 unterschiedlich tief ins Innere des Stapels. Der rechts in der Darstellung angelegte Isolationsgraben 214 erstreckt sich von der Hauptseite 218 durch die Gegenelektrodenschicht 106 und die Sensorkernschicht 104 bis zu der zweiten Isolationsschicht 204, die übrigen drei Isolationsgräben 214 erstrecken sich von der Hauptseite 218 durch die Gegenelektrodenschicht 106, die Sensorkernschicht 104 und die Elektrodenschicht 102 bis zu der ersten Isolationsschicht 202. Damit wird auch die Gegenelektrodenschicht 106 in - hier gleich große - Abschnitte getrennt. Das Anlegen der Isolationsgräben 214 kann beispielsweise in einem Ätzverfahren erfolgen. Die Isolationsgräben 214 sind möglichst eng, in der Größenordnung von 1 µm bis 5 µm, dimensioniert. Dies entspricht einem hohen Aspektverhältnis von ca. 1:50 bis 1:100. Anders als in der Darstellung in Fig. 7 gezeigt, können auch im Substrat 200 Isolationsgräben 214 angelegt werden.

Fig. 8 zeigt in einer weiteren Schnittdarstellung das Ergebnis eines folgenden Prozessschritts in der Herstellung des Inertialsensors 100. Hier sind die Isolationsgräben 214 mit dem Isolationsmaterial 224 verschlossen. Wie die Darstellung zeigt, dringt das Isolationsmaterial 224 teilweise in die Isolationsgräben 214 ein und liegt abschnittsweise auf von der von der Sensorkernschicht 104 abgewandten Hauptseite 218 der Gegenelektrodenschicht 106 auf. Das Isolationsmaterial 224 bildet einen gasdichten Verschluss der Isolationstrenche 214. Mit dem Verschluss der Isolationsgräben 214 mit dem Isolationsmaterial 224 wird eine elektrische Isolation hergestellt. Bei dem Isolationsmaterial 224 kann es sich z. B. um SiO₂ oder SiN handeln. Zum Aufbringen der Isolation kann das Isolationsmaterial 224 über chemische Niederdruck-Gasphasenabscheidung bzw. einen LPCVD-Prozess oder plasmaunterstützte chemische Gasphasenabscheidung bzw. einen PECVD-Prozess abgeschieden werden. Eine weitere Variante ist die Abscheidung im thermischen Oxidations-Prozess. Alternativ kann die Isolation auch über einen Schichtstapel unterschiedlicher Schichten bereitgestellt werden.

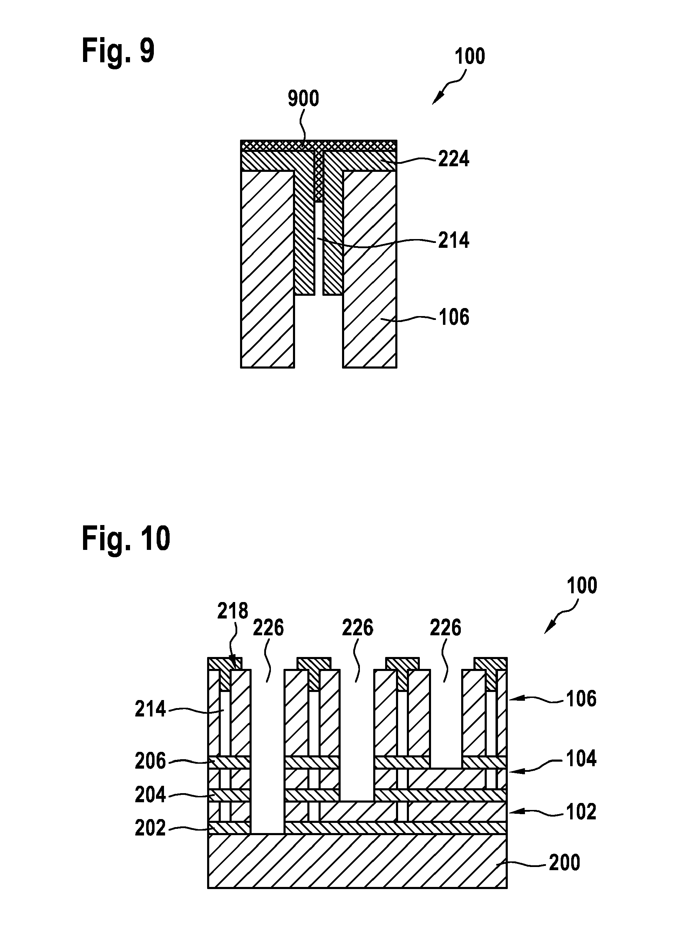

Fig. 9 zeigt anhand einer Schnittdarstellung das Ergebnis eines weiteren Prozessschritts zur Herstellung des Inertialsensors 100. Gezeigt ist ein Ausschnitt des Schichtaufbaus aus Fig. 8 mit einem der Isolationsgräben 214 im Material der Gegenelektrodenschicht 106. Wie die Darstellung zeigt, wurde auf dem Isolationsmaterial 224, das in den Isolationsgraben 214 hineinreicht, anschließend eine Schicht 900 eines leitfähigen Materials abgeschieden. Bei dem in Fig. 9 gezeigten Ausführungsbeispiel wurde Silizium verwendet. Der zusätzliche Verschluss mit der Schicht 900 ist vorteilhaft, wenn es darum geht, die Isolationsgräben 214 zum Einschluss eines Unterdruckes im Mikrobarbereich in dem Inertialsensor 100 zu nutzen, was z. B. über einen Hochtemperatur-EpiPolySi-Prozess geschehen kann. Die hohen Temperaturen sind in diesem Fall förderlich, um einen möglichst nonkonformen Verschluss, d. h. einen Verschluss mit niedriger Eindringtiefe in die Gräben 214, zu erreichen. Die isolierende Schicht 900 wird mit einem gewünschten Design strukturiert.

Fig. 10 zeigt wiederum in einem Querschnitt das Ergebnis eines beispielhaften Anlegens der Kontaktierungsgräben 226 des Inertialsensors 100. Wie die Darstellung in Fig. 10 zeigt, werden bei einer weiteren Strukturierung zumindest der dritten Funktionsschicht 106 die Kontaktierungstrenche bzw. Kontaktierungsgräben 226 von der von der Sensorkernschicht 104 abgewandten Hauptseite 218 der Gegenelektrodenschicht 106 unterschiedlich tief ins Innere des Stapels geätzt, und zwar bei dem in Fig. 10 gezeigten Ausführungsbeispiel jeweils ein Kontaktierungsgraben 226 zwischen zwei Isolationsgräben 214. Der erste Kontaktierungsgraben 226 links in der Darstellung durchdringt dabei die Gegenelektrodenschicht 106, die dritte Isolationsschicht 206, die Sensorkernschicht 104, die zweite Isolationsschicht 204, die Elektrodenschicht 102 sowie die erste Isolationsschicht 202 und erreicht das Substrat 200. Der zweite Kontaktierungsgraben 226 in der Mitte der Darstellung stoppt auf der Elektrodenschicht 102, und der dritte Kontaktierungsgraben 226 rechts in der Darstellung stoppt auf der Sensorkernschicht 104.

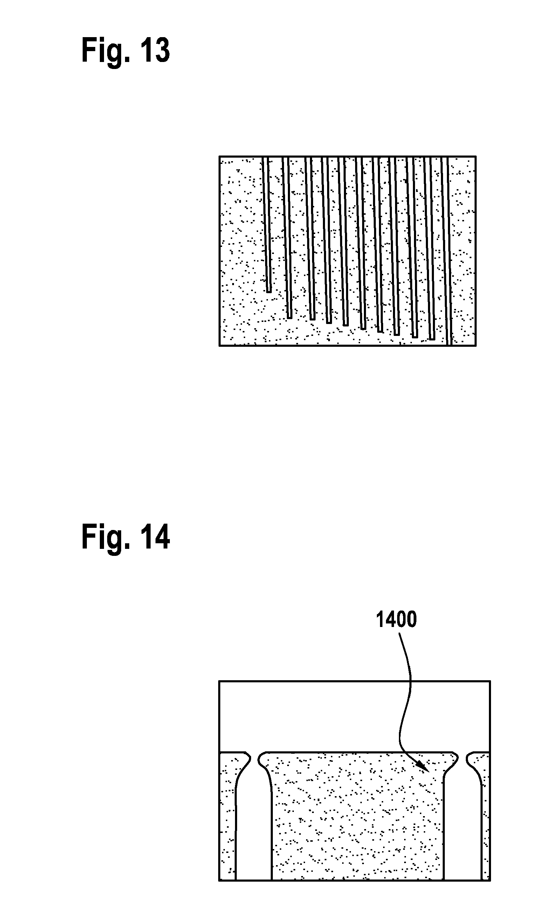

Um die vorteilhaften geringen Baugrößen darzustellen, liegen die getrenchten Strukturen 226 in der Größenordnung von 3 µm bis 10 µm. Damit werden vorteilhaft hohe Aspektverhältnisse von 1:15 bis 1:50 erreicht. Die Isolationsschichten 202, 204, 206 werden abschnittsweise entfernt und damit der Zugang zur jeweiligen zu kontaktierenden Schicht 102, 104, 200 hergestellt. Tiefere Ebenen werden über ein Ätzen weiterer Isolationsschichten und darunterliegender Hohlräume erreicht. In diesem Schritt bei der Herstellung des Inertialsensors 100 kommt es unweigerlich zu Hinterschnitten, zum einen durch isotropes Entfernen bzw. Überätzen der Isolationsschichten 202, 204, 206 und zum anderen durch unvermeidliche Justageversätze. Diese Hinterschnitte werden durch die Kontaktierung aufgefangen. Auf die Hinterschnitte wird nochmals genauer anhand der nachfolgenden Figuren 13 bis 15 eingegangen.

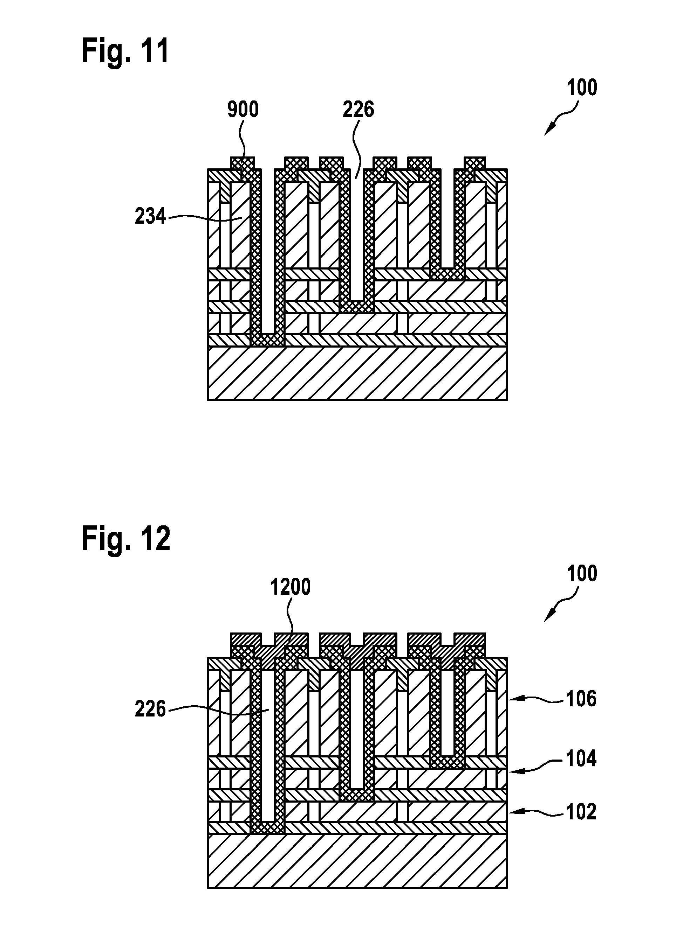

Fig. 11 zeigt wieder im Querschnitt das Ergebnis eines nachfolgenden Prozessschritts in der Herstellung des Inertialsensors 100, gemäß einem Ausführungsbeispiel der vorliegenden Erfindung. Wie zuvor bei den Isolationsgräben wird auch auf den Innenwänden 234 der Kontaktierungsgräben 226 eine elektrisch leitfähige Schicht 900 abgeschieden. Bei dem in Fig. 11 gezeigten Ausführungsbeispiel des Inertialsensors 100 wurde zur Bildung der Kontaktierungsschicht 900 eine hoch dotierte Polysilizium- bzw. amorphe Siliziumschicht in einem LPCVD-Prozess abgeschieden. Es wurde bei einer Abscheidungstemperatur gearbeitet, bei der der Prozess eindeutig reaktionslimitiert ist und damit die Abscheiderate nicht durch die Diffusion bestimmt wird, sodass die Abscheidung 900 bis tief in die engen Gräben 226 gleichmäßig ist.

Fig. 12 zeigt in einer Schnittdarstellung ein exemplarisches Ergebnis eines abschließenden Prozessschrittes der Metallisierung des Inertialsensors 100. Bei dem in Fig. 12 gezeigten Ausführungsbeispiel wurde in einem Sputter-Prozess eine Abschlussmetallisierung 1200 auf die Oberseite des Inertialsensors 100 aufgebracht. Wie die Darstellung in Fig. 12 zeigt, wird unter Anwendung des Sputterprozesses die Abschlussmetallisierung 1200 mit einer nur geringen Eindringtiefe in die Kontaktierungsgräben 226 auf den Inertialsensor 100 aufgebracht.

Figuren 13 bis 15 veranschaulichen anhand von Elektronenmikroskopaufnahmen die Entstehung von Hinterschnitten während eines Ätzverfahrens zum Anlegen der Isolationsgräben und/oder Kontaktierungsgräben.

Fig. 13 zeigt eine Mehrzahl von Gräben, die hier mittels des reaktiven lonentiefenätzens bzw. DRIE (Deep Reactive Ion Etching) in einem Wafer angelegt wurden. Die Gräben wurden mit einer Breite von drei Mikrometern und einer Tiefe von 100 Mikrometern in einem Aspektverhältnis von 1:50 in den Wafer geätzt.

Fig. 14 zeigt in einem vergrößerten Detailausschnitt der Aufnahme aus Fig. 13 einen im Ätzverfahren entstandenen Hinterschnitt 1400, der als Ergebnis einer konformen Abscheidung von Polysilizium in die Gräben gefüllt wurde.

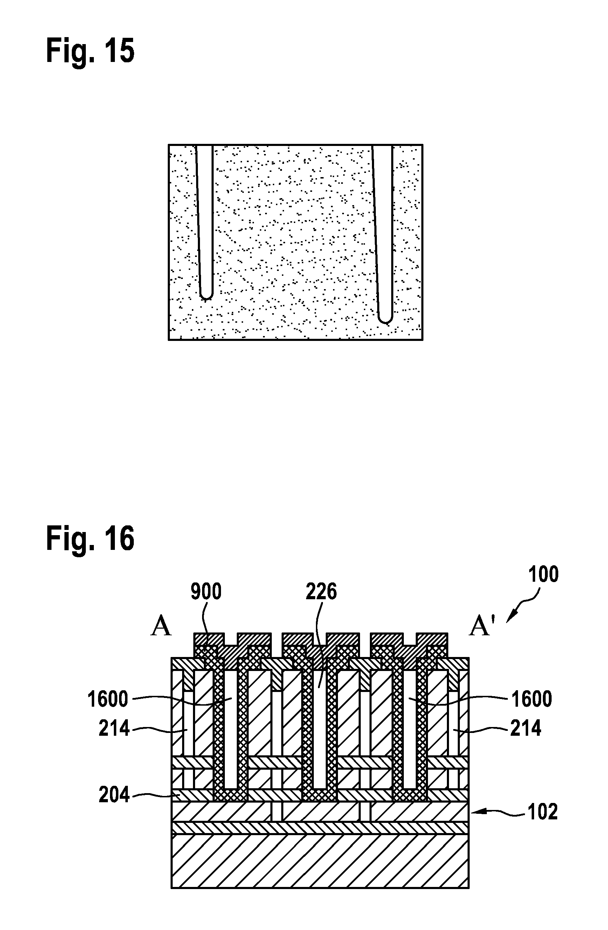

Fig. 15 zeigt den Wafer in 100 µm Tiefe, nachdem in einem LPCVD-Prozess bei 620 °C dotiertes Polysilizium abgeschieden wurde. Die Schichtdicke am Boden der Gräben ist nur um ca. 10 % geringer als an der Oberfläche des Wafers.

Fig. 16 zeigt wiederum in einer Schnittdarstellung einen beispielhaften Koaxialaufbau des Inertialsensors 100 als Ergebnis einer beispielhaften Variante des oben besprochenen Verfahrens zum Herstellen des Inertialsensors 100. Der Aufbau des in der Darstellung gezeigten Ausführungsbeispiels des Inertialsensors 100 entspricht dem des in Fig. 12 gezeigten, mit dem Unterschied, dass alle Kontaktierungsgräben 226 auf der Elektrodenschicht 102 stoppen und der in der Darstellung linke Isolationsgraben 214 wie der in der Darstellung rechte Isolationsgraben 214 an der zweiten Isolationsschicht 204 stoppt.

Bei dem in Fig. 16 im Schnitt gezeigten Ausführungsbeispiel des Inertialsensors 100 umgibt ein Abschirmungsgraben 1600 mantelförmig den mittig angeordneten Kontaktierungsgraben 226, um den Kontaktierungsgraben 226 im Sinne eines Shields elektrisch abzuschirmen. Ein elektrischer Widerstand der in Fig. 16 gezeigten Kontaktierung ist über die hier in einer Größenordnung von 1 mΩcm abgeschiedene Siliziumschicht 900 und über die Leitfähigkeit der einzelnen Funktionsschichten 102, 104, 106 definiert. Die Darstellung in Fig. 16 zeigt, wie zur Minimierung der kapazitiven Verluste die Kontakte 226, 1600 wie ein Koaxialleiter aufgebaut sind. Der wie ein Mantel um den Kontaktierungsgraben 226 angelegte Kontaktierungsgraben 1600 kann auf ein definiertes Potenzial gelegt werden.

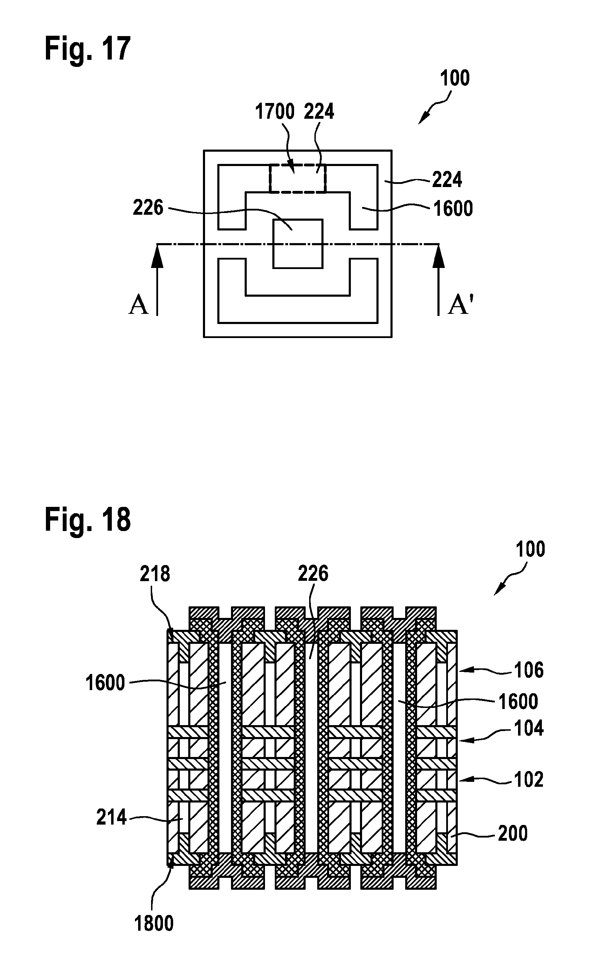

Fig. 17 zeigt eine Aufsicht auf den Koaxialaufbau des Inertialsensors 100 aus Fig. 16 entlang einer Schnittlinie A-A'. Hier ist gut zu erkennen, wie der Abschirmungsgraben 1600 den Kontakt bzw. Kontaktierungsgraben 226 als geschlossenes Silizium-Shield bzw. Siliziumring umgibt. Über eine geeignete Umverdrahtung bzw. einen Zugang zu Bondpads 1700 oder Ähnliches wird der Kontakt 226 über die Isolation 224 nach außen geführt.

Fig. 18 zeigt in einer Schnittdarstellung ein Ausführungsbeispiel des Inertialsensors 100 als Ergebnis einer weiteren beispielhaften Variante des oben besprochenen Verfahrens zum Herstellen des Inertialsensors 100. Fig. 18 zeigt den Inertialsensor 100 im Koaxial-Aufbau mit Shield und Durchkontaktierung. Das in Fig. 18 gezeigte Ausführungsbeispiel des Inertialsensors 100 entspricht dem im Fig. 16 gezeigten, mit dem Unterschied, dass sowohl die Isolationsgräben 214 als auch der Kontaktierungsgraben 226 und der mantelförmige Abschirmungsgraben 1600 von der von der Sensorkernschicht 104 abgewandten Hauptseite 218 der Gegenelektrodenschicht 106 durch den gesamten Schichtaufbau bis zu einer von der Sensorkernschicht 104 abgewandten Hauptseite 1800 des Substrats 200 durchgeführt sind.

Gemäß dem in Fig. 18 gezeigten Ausführungsbeispiel des Inertialsensors 100 ist eine Kontaktierung der ersten Funktionsschicht bzw. Elektrodenschicht 102 damit auch von einer Gegenseite zu der Gegenelektrodenschicht 106 her möglich. Diese Variante des Inertialsensors 100 bietet damit für die Integration mehrerer der Sensoren 100 zu einem Multiaxensensor einen entscheidenden Vorteil, da elektrische Signale durch den Chip von der Vorderseite auf die Rückseite geführt werden können. Um dies zu erreichen, sind die Prozessschritte, die bei den oben gezeigten Ausführungsbeispielen an der dritten Funktionsschicht 106 durchgeführt wurden, auch am Substrat 200 auszuführen. So entsteht eine Durchkontaktierung wie in Fig. 18 gezeigt.

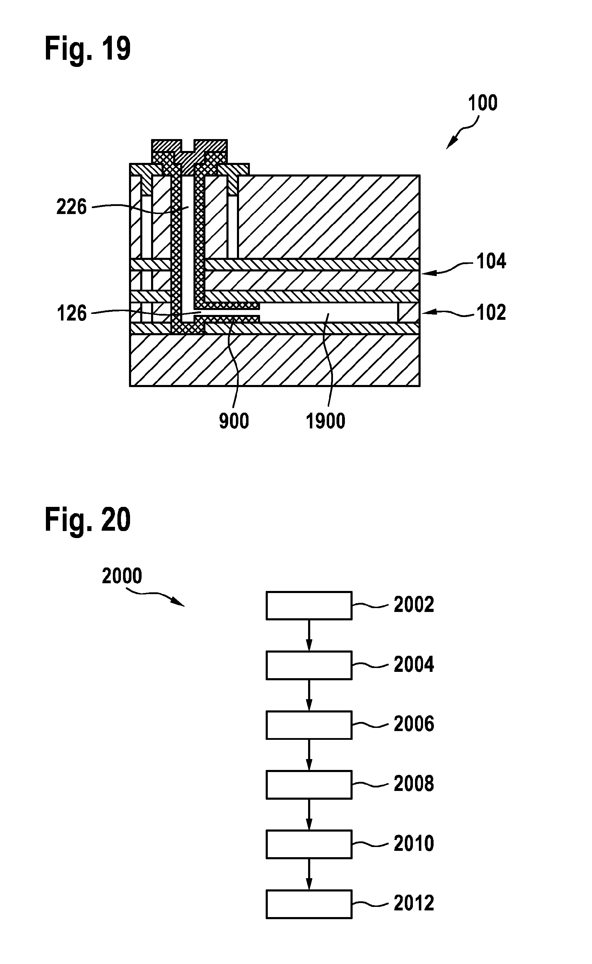

Fig. 19 zeigt in einem weiteren Querschnitt einen Detailausschnitt eines Ausführungsbeispiels des Inertialsensors 100 als Ergebnis einer weiteren beispielhaften Variante des oben besprochenen Verfahrens zum Herstellen des Inertialsensors 100. Eine Möglichkeit zum Herstellen des für die Funktionalität des Beschleunigungssensorelements des Inertialsensors 100 benötigten zweiten, höheren Innendrucks in der zweiten Sensorkaverne 126 ergibt sich aus dem Einschluss des Sputter-Drucks während des Herstellungsverfahrens des Inertialsensors 100. Dies wird ermöglicht, indem in der ersten Funktionsschicht 102 bzw. der zweiten Funktionsschicht 104 ein verlängerter größerer Hohlraum 1900 erzeugt wird. Damit werden die Abscheidebedingungen der leitfähigen Schicht 900 im Hohlraum 1900 in Richtung des diffusionslimitierten Bereichs verschoben und der Hohlraum 1900 damit nicht verschlossen. Im abschließenden Sputter-Schritt wird dann der Zugang zu dem angrenzenden Kontaktierungsgraben 226 verschlossen und der Sputter-Druck - einschließlich eventueller Partialdrücke durch Ausgasung - in der zweiten Sensorkaverne 126 eingeschlossen. Damit kann ein Druck von > 10 mbar eingeschlossen werden.

Fig. 20 zeigt zusammenfassend zu den Figuren 6 bis 19 ein Ablaufdiagramm eines grundlegenden Ausführungsbeispiels eines Herstellungsverfahrens 2000 zum Herstellen eines Inertialsensors. Unter dem Herstellungsverfahren 2000 ist ein etabliertes Fertigungsverfahren aus der Mikrosystemtechnik zur Herstellung des Inertialsensors, wie er in den Figuren 1 bis 5 vorgestellt ist, zu verstehen.

In einem Schritt 2002 wird ein Wafer-Schichtaufbau bereitgestellt, der sich aus einer eine Elektrode aufweisenden Elektrodenschicht, einer zwei beweglich gelagerte Sensorkerne aufweisenden Sensorkernschicht aus einem monokristallinen Material und einer zwei Gegenelektroden aufweisenden Gegenelektrodenschicht zusammensetzt. In einem ersten Schritt 2004 wird eine Mehrzahl von Schächten von einer von der Sensorkernschicht abgewandten Hauptseite der Gegenelektrodenschicht durch die Gegenelektrodenschicht zu der Sensorkernschicht geätzt, um Isolationsgräben in dem Schichtaufbau bereitzustellen. In einem Schritt 2006 wird zur elektrischen Trennung der Isolationsgräben ein Isolationsmaterial in die Isolationsgräben eingebracht. In einem Schritt 2008 wird für eine elektrische Kontaktierung einzelner Elemente des Inertialsensors eine weitere Mehrzahl von Schächten von der von der Sensorkernschicht abgewandten Hauptseite der Gegenelektrodenschicht durch die Gegenelektrodenschicht und/oder die Sensorkernschicht und/oder die Elektrodenschicht angelegt. In einem Schritt 2010 wird zur Herstellung der elektrischen Kontaktierung eine elektrisch leitfähige Beschichtung auf Innenwände der Kontaktierungsgräben aufgebracht. In einem Schritt 2012 wird auf die von der Sensorkernschicht abgewandte Hauptseite der Gegenelektrodenschicht eine Abschlussmetallisierung aufgesputtert.

Gemäß einer Ausführungsform wird in dem Herstellungsverfahren 2000 für MEMS Inertialsensoren ein Unterdruck in der Sensorkaverne bzw. den Sensorkavernen eingeschlossen. Der optimale Kavernendruck unterscheidet sich je nach Sensor. Drehratesensoren benötigen einen niedrigeren Unterdruck als Beschleunigungssensoren. Bei dem hier vorgestellten Konzept kann der benötigte Druck während des Herstellungsprozesses 2000 in oder zwischen Funktionsschichten des Inertialsensors eingeschlossen werden. Damit kann auf eine Kappe, bestehend aus einem Wafer, die nachträglich über die Struktur gebondet wird, verzichtet werden.

Zusammengefasst besteht das Herstellungsverfahren 2000 aus zwei Prozessen. Der erste Prozess schafft die elektrische Isolierung, und in im zweiten Prozess wird die elektrische Kontaktierung vorgenommen.

Mit dem Herstellungsverfahren 2000 kann ein Inertialsensor gefertigt werden, der mit einer elektrischen Kontaktierung der vergrabenen elektrisch aktiven Schichten mit einem beispielhaften Durchmesser von nur 50 Mikrometern kleinbauend ist, einen elektrischen Widerstand von weniger als 50 Ohm aufweist und durch eine geringe Kapazität zur umgebenden Schicht gekennzeichnet ist. Aufbaubedingt ist eine Kontaktierung durch unterschiedliche Lagen, wie u. a. Silizium oder SiO₂, ggf. mit Hinterschnitten, realisiert. Es ist eine elektrische Kontaktierung unterschiedlicher Ebenen in variabler Tiefe umgesetzt. Ferner ist ein gemäß dem Herstellungsverfahren 2000 gefertigter Inertialsensor ausschließlich der abschließenden Metallisierung hochtemperaturstabil und mechanisch stabil. Der Einschluss geeigneter Drücke für Drehratensensoren von unter einem Millibar und für Beschleunigungssensoren von über 10 Millibar ist ohne Weiteres möglich.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Inertialsensor (100) mit folgenden Merkmalen:
einer eine Elektrode (108) aufweisenden Elektrodenschicht (102);
einer eine erste Gegenelektrode (110) und eine zweite Gegenelektrode (112) aufweisenden Gegenelektrodenschicht (106); und
einer einen ersten beweglich gelagerten Sensorkern (114) und einen zweiten beweglich gelagerten Sensorkern (116) aufweisenden Sensorkernschicht (104) aus einem monokristallinen Material, wobei die Sensorkernschicht (104) zwischen der Elektrodenschicht (102) und der Gegenelektrodenschicht (106) angeordnet ist.

2. Inertialsensor (100) gemäß Anspruch 1, bei dem ein erster Abschnitt (120) der Elektrode (108), der erste Sensorkern (114) und die erste Gegenelektrode (110) ein Drehratensensorelement (128) des Inertialsensors (100) bilden und ein zweiter Abschnitt (122) der Elektrode (108), der zweite Sensorkern (116) und die zweite Gegenelektrode (112) ein Beschleunigungssensorelement (130) des Inertialsensors (100) bilden.

3. Inertialsensor (100) gemäß einem der vorangegangenen Ansprüche, mit einem Kontaktierungsgraben (226) zum elektrischen Kontaktieren der Elektrode (108), wobei sich der Kontaktierungsgraben (226) von einer von der Sensorkernschicht (104) abgewandten Hauptseite (218) der Gegenelektrodenschicht (106) durch die Gegenelektrodenschicht (106) und die Sensorkernschicht (104) zu der Elektrode (108) erstreckt, und wobei eine Innenwand (234) des Kontaktierungsgrabens (226) eine elektrisch leitfähige Beschichtung (900) aufweist.

4. Inertialsensor (100) gemäß Anspruch 3, mit einem Substrat (200), das benachbart zu einer von der Sensorkernschicht (104) abgewandten Hauptseite (208) der Elektrodenschicht (102) angeordnet ist, wobei sich der Kontaktierungsgraben (226) bis zu einer von der Sensorkernschicht (104) abgewandten Hauptseite (1800) des Substrats (200) erstreckt.

5. Inertialsensor (100) gemäß Anspruch 3 oder 4, mit einem Abschirmungsgraben (1600) zum elektrischen Abschirmen des Kontaktierungsgrabens (226), wobei der Abschirmungsgraben (1600) den Kontaktierungsgraben (226) mantelförmig umgebend angeordnet ist.

6. Inertialsensor (100) gemäß einem der vorangegangenen Ansprüche, mit einem Isolationsgraben (214), der sich zum elektrischen Isolieren der ersten Gegenelektrode (110) von der zweiten Gegenelektrode (112) von der von der Sensorkernschicht (104) abgewandten Hauptseite (218) der Gegenelektrodenschicht (106) durch die Gegenelektrodenschicht (106) zu der Sensorkernschicht (104) erstreckt, wobei der Isolationsgraben (214) zumindest teilweise mit einem Isolationsmaterial (224) verfüllt ist.

7. Inertialsensor (100) gemäß Anspruch 6, mit einem weiteren Isolationsgraben (214), der sich zum Unterteilen der ersten Gegenelektrode (110) in einen ersten Gegenelektrodenabschnitt (220) und einen zweiten Gegenelektrodenabschnitt (222) von der von der Sensorkernschicht (104) abgewandten Hauptseite (218) der Gegenelektrodenschicht (106) durch die Gegenelektrodenschicht (106) zu der Sensorkernschicht (104) erstreckt, wobei der weitere Isolationsgraben (214) zumindest teilweise mit dem Isolationsmaterial (224) verfüllt ist.

8. Inertialsensor (100) gemäß einem der vorangegangenen Ansprüche, der eine erste Sensorkaverne (124), in der ein erster Druck herrscht, und eine zweite Sensorkaverne (126), in der ein sich von dem ersten Druck unterscheidender zweiter Druck herrscht, aufweist, wobei der erste Sensorkern (114) in der ersten Sensorkaverne (124) beweglich gelagert angeordnet ist und der zweite Sensorkern (116) in der zweiten Sensorkaverne (126) beweglich gelagert angeordnet ist.

9. Inertialsensor (100) gemäß Anspruch 8, bei dem die erste Sensorkaverne (124) und/oder die zweite Sensorkaverne (126) durch die elektrisch leitfähige Beschichtung (900) des Kontaktierungsgrabens (226) und/oder durch das Isolationsmaterial (224) des Isolationsgrabens (214) und/oder des weiteren Isolationsgrabens (214) gegenüber einem Umfeld des Inertialsensors (100) gasdicht abgeschlossen ist.

10. Inertialsensor (100) gemäß einem der vorangegangenen Ansprüche, mit zumindest einem Schaltungselement (300), das an der von der Sensorkernschicht (104) abgewandten Hauptseite (218) der Gegenelektrodenschicht (106) angeordnet ist.

11. Inertialsensor (100) gemäß einem der vorangegangenen Ansprüche, bei dem die erste Gegenelektrode (110) und/oder die zweite Gegenelektrode (112) aus einem monokristallinen Material gebildet ist.

12. Inertialsensor (100) gemäß einem der vorangegangenen Ansprüche, bei dem die Sensorkernschicht (104) und/oder Gegenelektrodenschicht (106) zumindest ein Funktionselement eines Drucksensors und/oder eines Hall-Sensors aufweist.

13. Inertialsensor (100) gemäß einem der vorangegangenen Ansprüche, bei dem der erste Sensorkern (114) und/oder der zweite Sensorkern (116) zum beweglichen Lagern Federelemente (118) aufweisen, wobei eine Erstreckungsrichtung der Federelemente (118) einer Kristallorientierung des monokristallinen Materials des ersten Sensorkerns (114) und zweiten Sensorkerns (116) entspricht.

14. Herstellungsverfahren (2000) zum Herstellen eines Inertialsensors (100), wobei das Herstellungsverfahren (2000) die folgenden Schritte aufweist:
Bereitstellen (2002) eines Schichtaufbaus aus einer eine Elektrode (108) aufweisenden Elektrodenschicht (102), einer einen ersten beweglich gelagerten Sensorkern (114) und einen zweiten beweglich gelagerten Sensorkern (116) aufweisenden Sensorkernschicht (104) aus einem monokristallinen Material und einer eine erste Gegenelektrode (110) und eine zweite Gegenelektrode (112) aufweisenden Gegenelektrodenschicht (106);
Ätzen (2004) eines Schachts von einer von der Sensorkernschicht (104) abgewandten Hauptseite (218) der Gegenelektrodenschicht (106) durch die Gegenelektrodenschicht (106) zu der Sensorkernschicht (104), um einen Isolationsgraben (214) zwischen der ersten Gegenelektrode (110) und der zweiten Gegenelektrode (112) anzulegen;
zumindest teilweises Einbringen (2006) eines Isolationsmaterials (224) in den Isolationsgraben (214), um die erste Gegenelektrode (110) von der zweiten Gegenelektrode (112) elektrisch zu isolieren;
Ätzen (2008) eines Schachts von der von der Sensorkernschicht (104) abgewandten Hauptseite (218) der Gegenelektrodenschicht (106) durch die Gegenelektrodenschicht (106) und die Sensorkernschicht (104) zu der Elektrode (108), um einen Kontaktierungsgraben (226) für die Elektrode (108) anzulegen; und
Aufbringen (2010) einer elektrisch leitfähigen Beschichtung (900) auf eine Innenwand (234) des Kontaktierungsgrabens (226), um die Elektrode (108) elektrisch zu kontaktieren.

15. Herstellungsverfahren (2000) gemäß Anspruch 14, mit einem Schritt des Sputterns (2012) einer Abschlussmetallisierung (1200) auf die von der Sensorkernschicht (104) abgewandte Hauptseite (218) der Gegenelektrodenschicht (106).
